# EUROPEAN PATENT SPECIFICATION

(11) **EP 0 640 374 B1**
(45) Date of publication and mention of the grant of the patent: **26.11.1997**
(21) Application number: 94909129.2
(22) Date of filing: 11.03.1994
(51) Int. Cl.: B01D 49/00, B01J 19/10

(54) **MULTIFREQUENCY ACOUSTIC CHAMBER FOR THE AGGLOMERATION AND SEPARATION OF SUSPENDED PARTICLES IN GAZ EFFLUENTS**
AKUSTISCHE MULTIFREQUENZ-KAMMER ZUR AGGLOMERATION UND ABSCHEIDUNG VON TEILCHEN AUS ABGASEN
CHAMBRE ACOUSTIQUE MULTIFREQUENCE POUR L'AGGLOMERATION ET LA SEPARATION DE PARTICULES EN SUSPENSION DANS DES EFFLUENTS GAZEUX

(30) Priority: 11.03.1993 ES 9300507
(43) Date of publication of application: 01.03.1995
(73) Proprietor: CONSEJO SUPERIOR INVESTIGACIONES CIENTIFICAS (CSIC), 28006 Madrid (ES)
(72) Inventor: GALLEGO JUAREZ, Juan A., Inst. Acustica Consejo, E-28006 Madrid (ES); RIERA FRANCO DE SARABIA, Germán, Inst. Acustica, E-28006 Madrid (ES); RODRIGUEZ CORRAL, Germán, Inst. Acustica, E-28006 Madrid (ES)
(74) Representative: Ungria Lopez, Javier
(86) International application number: ES9400026
(87) International publication number: WO9420195

(56) References cited:
- EP-A- 0 450 030
- EP-A- 0 488 097
- DE-A- 2 304 597

## Description

Particles suspended in gases coming from industrial emissions or from the exhausts of internal combustion engines constitute one of the factors with the greatest impact on atmospheric contamination. More specifically, the very fine particles (smaller than 5 micrometers) which are very difficult to eliminate with conventional separation technologies represent a major heath hazard because of their penetration and adhesion ability to respiratory tissue as well as for their general toxicity. At this time, efficient industrial emission control of particulate matter is only possible down to particle sizes in the order of some microns by means of electrostatic filters.

Acoustic energy offers a new method for elimination of micrometer- and submicrometer-sized particles. The Spanish Patent 439.523 indicates how the application of a high intensity acoustic field with an appropriate frequency in an aerosol gives raise to an agglomeration processes of the particles, which form the aerosol, increasing their size to facilitate in this way their later precipitation or separation in a conventional or gravity collector. The process takes advantage of the effects of vibration, hydrodynamic interaction, and entrainment which are produced between the particles by the action of the acoustic field.

The invention object of the present patent refers to an acoustic chamber for treatment of gaseous effluents which contain solid or liquid particles in suspension. There are some precedents of equipment of this type. The Spanish Patent 459.523 presents a cylindrical chamber of which one end incorporates an acoustic emitter of radiating-stepped-plate type and the other one a plane reflector paralleling the face side of the emitter. The aerosol to be treated is introduced tangentially and it carries out a helicoidal course which, even though favoring the particle agglomeration, introduces load losses and provokes turbulent flow.
EP-A-488097 presents a new chamber type of polygonal cross section in which the aerosol enters axially while the acoustic emitter or emitters (whose type is not specified) are located at an oblique angle with respect to the chamber axis. This way, the acoustic radiation is repetitively reflected on the chamber walls until it falls, on the other end of the chamber, onto a plane reflector which is also located at an oblique position with respect to the axis. This oblique incidence, however, can favor the excitation of multiple modes which can produce energy dispersion between the principal axial mode and the different transversal modes. On the other hand, with the use of several acoustic sources of equal frequency within the same chamber section one risks to produce negative interferences by generating the acoustic field.

Both inventions try to take advantage of the maximum axial length of the chamber and of the application of a single operating frequency. Cooling devices for the acoustic emitters, which permit the operation with gases at high temperatures, are proposed in none of these systems.

DE-A-23 04 597 discloses an arrangement for agglomeration of particles in gaseous effluents by means of acoustic waves. The arrangement comprises a chamber which includes to opposite walls with mutually parallel surfaces; on one of said walls, an acoustic emitter is situated, which emits acoustic radiation in a direction perpendicular to said wall. The radiation is reflected against the opposite wall, giving rise to a standing wave.

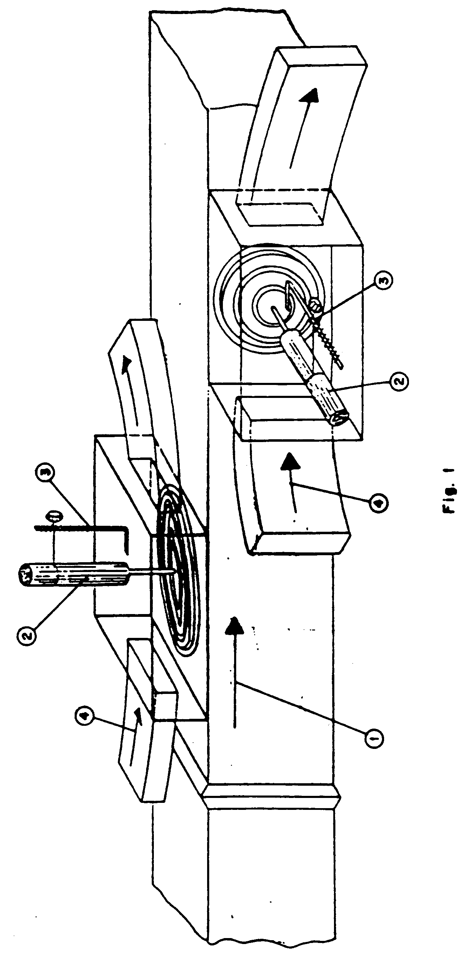

The object of the present invention as claimed is a new chamber type with polygonal, preferably rectangular cross section based on the application of high acoustic energy levels by means of radiating-stepped-plate type generators (cf. EP-A-450030) which treat an aerosol flow, throughout its passing-by, in direction perpendicular to the propagation (Figure 1). In this manner, the gases to be treated will flow in a straight line along the chamber axis, indicated by Arrow 1, while the emitters (2), which are of different frequencies, will be distributed on the side walls to create intensive stationary fields which will cover the treatment chamber from end to end in all its different sections without leaving extensive zones at low acoustic levels. The chamber walls opposing the emitters will function as reflectors. The transducer support implements an adjustment device (3) which permits the variation of the radiator-reflector distance to achieve an optimum stationary field. By letting every acoustic emitter act on the width of the chamber (instead of on the length, as done in the former mentioned inventions) one will need to cover smaller distances and so one will be able to achieve a higher intensity as well as a better homogeneity of the acoustic field, since generally one will work in the nearfield of the emission where the beam maintains practically parallel.

The application of different frequencies along the flow path is very important since, because of the existence of an optimum agglomeration frequency for each particle size, the change of the size distribution through the process itself requires a change of the treatment frequency.

In Figure 1, where following the present invention a scheme of the acoustic chamber for aerosol treatment is presented, it is also proposed to include a cooling system for the transducers for their use in treatment of high temperature gases. This system is based on the introduction of a cold or ambient temperature air flow (at the level of the radiating plate) which acts as a gaseous curtain separating the acoustic emitter and the high temperature aerosol. This way, a temperature gradient is produced which not only serves to thermally protect the emitter but also, in addition, to produce a gradual effect of impedance adaptation between the radiator and the medium. Such a system might be required for those industrial applications in which the gaseous effluents proceeding combustion processes are emitted at temperatures in the order of 150°C or even higher.

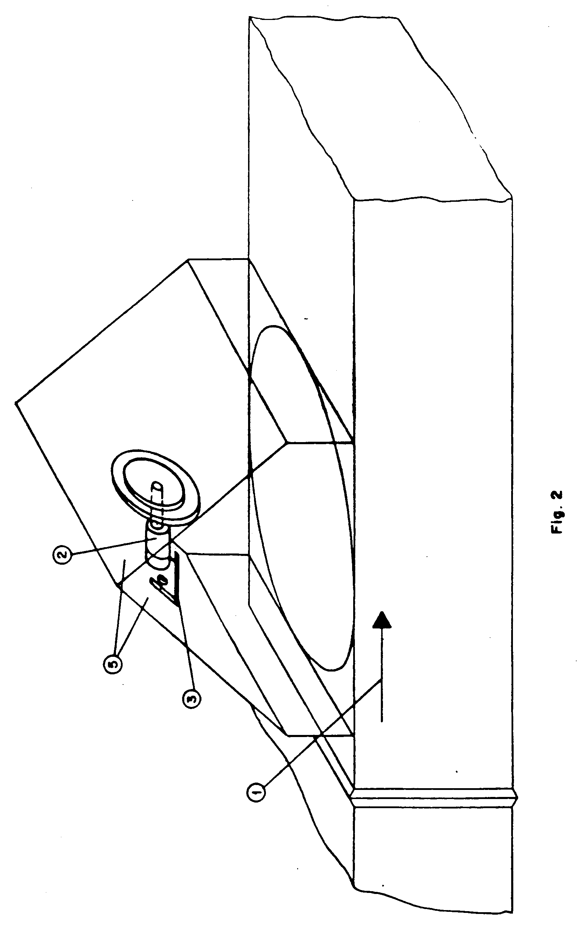

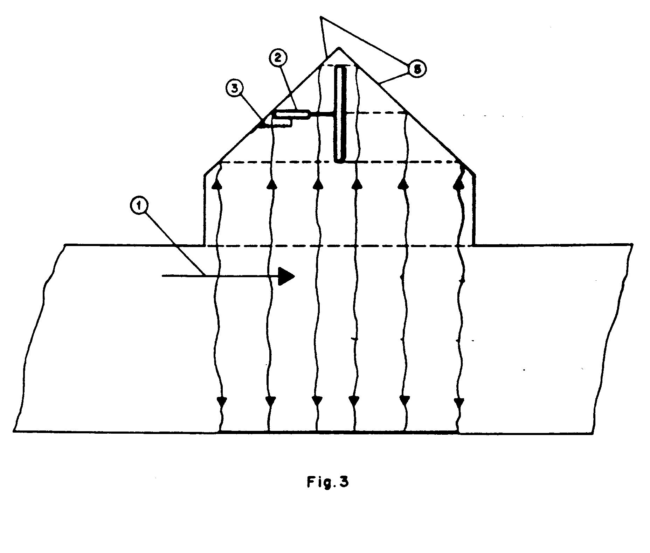

As said before, the acoustic emitters to be used in the proposed chamber are of type "plate radiator with stepped profile." In the arrangement shown in Figure 1, the emission from the plate's backside is not taken advantage of for the agglomeration process, except in the case if the mentioned plate is completely introduced in the interior of the treatment chamber. An arrangement with which the mentioned backside radiation could be realized is presented in Figure 2. The transducer (2) is located with its axis parallel to that of the chamber in a way that the radiating plate is situated in between of two reflector plates (5), which form an angle such that the forward as well as the backward radiation can be reflected and normally directed into the gas stream which is flowing along the treatment chamber (Figure 3). Like this, one obtains an efficient use of the total radiated energy of the emitter. It is to say, however, that this arrangement implies major difficulties on the adjustment and realization of an optimum stationary wave.

As an example, we can show that with 150 W power a 20 kHz transducer, located with its axis parallel to that of the chamber in between of two plane reflectors which form a 90° angle and are positioned at a 45° angle with respect to the radiating plate, achieves, in a chamber with a cross section of 140 x 60 cm, acoustic pressure levels higher than the 150 dB which are necessary for rapid generation of the acoustic agglomeration phenomenon. Without taking advantage of the backside radiation by means of reflectors, the mentioned pressure levels are reached with applied powers in the order of 200 W.

In a rectangular chamber with a cross section of 0,5 x 0,5 m and a length of about 2 m it is possible to treat aerosol flows of from 1000 to 2000 m³/h by applying four radiating plate transducers with diameters of 48 cm and radiated acoustic powers in the order of 300 W/unit. The transducers are located as groups along one of the chamber walls or alternatingly as shown in Figure 1. If the backside radiation is not taking advantage of by abstaining from using angled reflectors with the radiators, the effective acoustic potential is approximately one half of the radiated one, that is to say in the order of 150 W/unit. This means that the total power applied to the aerosol on its run throughout the treatment chamber is about 600 W. The intensity levels achieved in the interior of the chamber are higher than 160 dB. This way, one achieves, with frequencies of 20 kHz for aerosols with initial particles from 0,2 to 2 micrometers and concentrations from 0,1 to 4 g/m³, enlargement of an order of magnitude. That is to say, the mean size grows from one to ten micrometers. This increase is decisive for the subsequent application of an electrostatic filter to the aerosol flow, since these filters are generally efficient from 5 micrometers on.

## Claims

1. Multifrequency acoustic chamber for agglomeration and separation of particles suspended in gaseous effluents,
- the chamber having a polygonal cross section and each wall facing an opposite wall parallel therewith, such that acoustic radiation emitted orthogonally in a direction from one wall will fall orthogonolly on a surface of an opposite wall and be reflected by said opposite wall, giving rise to the generation of a stationary acoustic field;
- said chamber having an input end and an output end, the walls of the chamber defining a flow path in a longitudinal direction from said input end to said output end;
- the chamber including a plurality of acoustic emitters (2), said emitters being disposed at said walls at positions along said flow path, each of said acoustic emitters (2) being arranged to emit radiation of high intensity at a determined frequency in an orthogonal direction with respect to the wall at which said acoustic emitter (2) is placed;
- said acoustic emitters being disposed to emit directly from a front side of a radiator plate into said flow path;
characterized in that
- said acoustic emitters (2) are of the radiating-stepped-plate type; and in that
- the acoustic emitters (2) are arranged such that radiation of different frequencies is emitted at different longitudinal positions along said flow path, in order to provide an adequate frecuency distribution in view of the particle size distribution along said longitudinal flow path.

2. Multifrequency acoustic chamber for agglomeration and separation of particles suspended in gaseous effluents,
- the chamber having a polygonal cross section and each wall facing an opposite wall parallel therewith, such that acoustic radiation emitted orthogonally in a direction from one wall will fall orthogonolly on a surface of an opposite wall and be reflected by said opposite wall, giving rise to the generation of a stationary acoustic field;
- said chamber having an input end and an output end, the walls of the chamber defining a flow path in a longitudinal direction from said input end to said output end;
- the chamber including a plurality of acoustic emitters (2), said emitters being disposed at said walls at positions along said flow path, each of said acoustic emitters (2) being arranged to emit radiation of high intensity at a determined frequency in an orthogonal direction with respect to the wall at which said acoustic emitter (2) is placed;
characterized in that
- said acoustic emitters (2) are of the radiating-stepped-plate type; and in that
- the acoustic emitters (2) are disposed to emit into the flow path by means of two plane reflectors (5) located on opposite sides of a radiator plate of the acoustic emitter (2) to form an angle with said radiator plate in such a way that radiation from a front side and a back side of said radiator plate is reflected by said plane reflectors and directed into said flow path in an orthogonal direction with respect to the wall at which the acoustic emitter (2) is placed; and in that
- the acoustic emitters (2) are arranged such that radiation of different frequencies is emitted at different longitudinal positions along said flow path, in order to provide an adequate frecuency distribution in view of the particle size distribution along said longitudinal flow path.

3. A multifrequency acoustic chamber according to claim 1, wherein the acoustic emitters (2) are provided with a cooling system including means for providing a laminar flow of cool air which serves as a curtain separating the acoustic emitter from hot gaseous effluents passing along the flow path.

4. A multifrequency acoustic chamber according to any of the preceding claims, wherein the acoustic emitters (2) are placed along the chamber walls as contiguous units or groups.

5. A multifrequency acoustic unit according to any of claims 1-3, wherein the acoustic emitters (2) are placed on alternating walls.

6. A multifrequency acoustic chamber according to any of the preceding claims, wherein the chamber is provided with adjustment systems (3) for adjusting the position of said radiator plates with respect to reflecting surfaces.

7. A multifrequency acoustic chamber according to any of the preceding claims, wherein said polygonal transverse cross section is a rectangular transverse cross section.

## Patentansprüche

1. Akustische Mehrfrequenz-Kammer zum Ansammeln und Abscheiden von Teilchen, die in Abgasen suspendiert sind, wobei die Kammer einen polygonalen Querschnitt aufweist und jede Wand zu einer gegenüberstehenden Wand parallel zu dieser weist, so daß akustische Strahlung, die orthogonal in einer Richtung von einer Wand ausgesandt wird, orthogonal auf eine Oberfläche einer gegenüberstehenden Wand fällt und von der genannten gegenüberstehenden Wand reflektiert wird, was Anlaß zu der Erzeugung eines stationären, akustischen Feldes gibt;
die genannte Kammer hat ein Eingangsende und ein Ausgangsende, wobei die Kammerwände einen Strömungsweg in einer Längsrichtung von dem genannten Einlaßende zu dem genannten Auslaßende begrenzen;
die Kammer schließt eine Mehrzahl von Schallgebern (2) ein, wobei die genannten Geber an den genannten Wänden an Positionen entlang dem genannten Strömungsweg angeordnet sind, jeder der genannten Schallgeber (2) ausgestaltet ist, Strahlung hoher Intensität bei einer bestimmten Frequenz in einer orthogonalen Richtung in bezug auf die Wand auszusenden, an der der genannte Schallgeber (2) angeordnet ist;
die genannten Schallgeber angeordnet sind, unmittelbar von einer Vorderseite einer Strahlerplatte in den genannten Strömungsweg auszusenden;
**dadurch gekennzeichnet**, daß
die genannten Schallgeber (2) vom abstrahlenden, abgestuften Plattentyp sind; und daß
die Schallgeber (2) so angeordnet sind, daß Strahlung unterschiedlicher Frequenzen an unterschiedlichen Längspositionen entlang dem genannten Strömungsweg ausgesendet werden, um eine angemessene Frequenzverteilung im Hinblick auf die Teilchengrößenverteilung entlang dem genannten länglichen Strömungsweg bereitzustellen.

2. Akustische Mehrfrequenz-Kammer zum Ansammeln und Abscheiden von Teilchen, die in Abgasen suspendiert sind, wobei die Kammer einen polygonalen Querschnitt aufweist und jede Wand zu einer gegenüberstehenden Wand parallel zu dieser weist, so daß akustische Strahlung, die orthogonal in einer Richtung von einer Wand ausgesandt wird, orthogonal auf eine Oberfläche einer gegenüberstehenden Wand fällt und von der genannten gegenüberstehenden Wand reflektiert wird, was Anlaß zu der Erzeugung eines stationären, akustischen Feldes gibt;
die genannte Kammer hat ein Eingangsende und ein Ausgangsende, wobei die Kammerwände einen Strömungsweg in einer Längsrichtung von dem genannten Einlaßende zu dem genannten Auslaßende begrenzen;
die Kammer schließt eine Mehrzahl von Schaltgebern (2) ein, wobei die genannten Geber an den genannten Wänden an Positionen entlang dem genannten Strömungsweg angeordnet sind, jeder der genannten Schallgeber (2) ausgestaltet ist, Strahlung hoher Intensität bei einer bestimmten Frequenz in einer orthogonalen Richtung in bezug auf die Wand auszusenden, an der der genannte Schallgeber (2) angeordnet ist;
**dadurch gekennzeichnet**, daß
die genannten Schallgeber (2) vom abstrahlenden, abgestuften Plattentyp sind; und daß
die Schallgeber (2) angeordnet sind, in den Strömungsweg mittels zweier ebener Reflektoren (5) auszusenden, die an gegenüberstehenden Seiten einer Strahlerplatte des Schallgebers (2) angeordnet sind, um einen Winkel mit der genannten Strahlerplatte derart zu bilden, daß Strahlung von einer Vorderseite und einer Rückseite der genannten Strahlerplatte von den genannten Ebenen Reflektoren reflektiert und in den genannten Strömungsweg in einer orthogonalen Richtung in bezug auf die Wand gelenkt wird, an der der Schallgeber (2) angeordnet ist; und daß die Schallgeber (2) so angeordnet sind, daß die Strahlung unterschiedlicher Frequenzen an unterschiedlichen Längspositionen entlang dem genannten Strömungsweg ausgesandt wird, um eine angemessene Frequenzverteilung im Hinblick auf die Teilchengrößenverteilung entlang demn genannten länglichen Strömungsweg bereitzustellen

3. Eine akustische Mehrfrequenz-Kammer gemäß Anspruch 1, worin die Schallgeber (2) mit einem Kühlsystem versehen sind, das eine Einrichtung einschließt, um eine laminare Strömung kalter Luft bereitzustellen, die als ein Vorhang dient, der den Schallgeber von heißen Abgasen trennt, die entlang dems Strömungsweg vorbeigehen.

4. Eine akustische Mehrfrequenz-Kammer gemäß irgendeinem der vorhergehenden Ansprüche, worin die Schallgeber (2) entlang den Kammerwänden als aneinander angrenzende Einheiten oder Gruppen angeordnet sind.

5. Eine akustische Mehrfrequenz-Kammer gemäß irgendeinem der vorhergehenden Ansprüche 1-3, worin die Schallgeber (2) an abwechselnden Wänden angeordnet sind.

6. Eine akustische Mehrfrequenz-Kammer gemäß irgendeinem der vorhergehenden Ansprüche, worin die Kammer mit Einstellsystemen (3) zum Einstellen der Position der genannten Strahlerplatten in bezug auf die reflektierenden Oberflächen versehen ist.

7. Eine akustische Mehrfrequenz-Kammer gemaß irgendeinem der vorhergehenden Ansprüche, worin der genannte polygonale Querschnitt ein rechteckiger Querschnitt ist.

## Revendications

1. Chambre acoustique multifréquences destinée à l'agglomération et à la séparation de particules en suspension dans des effluents gazeux,
- la chambre ayant une section polygonale, chaque paroi tournée vers une paroi opposée étant parallèle à celle-ci, si bien que le rayonnement acoustique émis perpendiculairement à partir d'une paroi tombe perpendiculairement sur une surface d'une paroi opposée et est réfléchi par cette paroi opposée et provoque ainsi la création d'un champ acoustique stationnaire,
- la chambre ayant une extrémité d'entrée et une extrémité de sortie, les parois de la chambre délimitant un trajet de circulation dans une direction longitudinale de l'extrémité d'entrée à l'extrémité de sortie,
- la chambre comprenant plusieurs émetteurs acoustiques (2) , les émetteurs étant disposés sur les parois à des positions qui se trouvent le long du trajet d'écoulement, chacun des émetteurs acoustiques (2) étant destiné à émettre un rayonnement de grande intensité à une fréquence déterminée dans une direction perpendiculaire à la paroi sur laquelle est placé l'émetteur acoustique (2) ,
- les émetteurs acoustiques étant disposés afin qu'ils émettent directement par une face avant d'une plaque formant radiateur dans le trajet d'écoulement,
caractérisé en ce que :
- les émetteurs acoustiques (2) sont du type à plaque de rayonnement à gradins, et en ce que :
- les émetteurs acoustiques (2) sont disposés afin que le rayonnement à des fréquences différentes soit émis à des positions longitudinales différentes le long du trajet d'écoulement, afin qu'une distribution convenable des fréquences en fonction de la distribution granulométrique soit formée le long du trajet longitudinal d'écoulement.

2. Chambre acoustique multifréquences destinée à l'agglomération et à la séparation de particules en suspension dans des effluents gazeux,
- la chambre ayant une section polygonale et chaque paroi tournée vers une paroi opposée étant parallèle à celle-ci, si bien qu'un rayonnement acoustique émis perpendiculairement à partir d'une paroi tombe perpendiculairement sur une surface d'une paroi opposée et est réfléchi par la paroi opposée, en provoquant la création d'un champ acoustique stationnaire,
- la chambre ayant une extrémité d'entrée et une extrémité de sortie, les parois de la chambre délimitant un trajet d'écoulement dans une direction longitudinale de l'extrémité d'entrée vers l'extrémité de sortie,
- la chambre comprenant plusieurs émetteurs acoustiques (2), les émetteurs étant placés aux parois à des positions le long du trajet d'écoulement, chacun des émetteurs acoustiques (2) étant destiné à émettre un rayonnement d'intensité élevée à une fréquence déterminée en direction perpendiculaire à la paroi sur laquelle est placé l'émetteur acoustique (2),
caractérisé en ce que :
- les émetteurs acoustiques (2) sont du type à plaque de rayonnement à gradins, et en ce que :
- les émetteurs acoustiques (2) sont disposés afin qu'ils émettent dans le trajet d'écoulement à l'aide de deux réflecteurs plans (5) placés sur les côtés opposés d'une plaque de rayonnement de l'émetteur acoustique (2) pour la formation, avec la plaque de radiateur, d'un angle tel que le rayonnement d'une face avant et d'une face arrière de la plaque formant radiateur est réfléchi par les réflecteurs plans et dirigé dans le trajet d'écoulement en direction perpendiculaire à la paroi sur laquelle est placé l'émetteur acoustique (2), et en ce que
- les émetteurs acoustiques (2) sont disposés de manière que le rayonnement aux différentes fréquences soit émis à des positions longitudinales différentes le long du trajet d'écoulement afin qu'une distribution convenable de fréquences soit formée d'une manière correspondant à la distribution granulométrique le long du trajet longitudinal d'écoulement.

3. Chambre acoustique multifréquences selon la revendication 1, dans laquelle les émetteurs acoustiques (2) ont un système de refroidissement comprenant un dispositif formant un écoulement laminaire d'air froid jouant le rôle d'un rideau séparant l'émetteur acoustique des effluents gazeux chauds passant le long du trajet d'écoulement.

4. Chambre acoustique multifréquences selon l'une quelconque des revendications précédentes, dans laquelle les émetteurs acoustiques (2) sont placés le long des parois de la chambre sous forme d'unités ou groupes contigus.

5. Unité acoustique multifréquences selon l'une quelconque des revendications 1 à 3, dans laquelle les émetteurs acoustiques (2) sont placés sur des parois qui alternent.

6. Chambre acoustique multifréquences selon l'une quelconque des revendications précédentes, dans laquelle la chambre possède des systèmes d'ajustement (3) destinés à ajuster la position des plaques de radiateur par rapport aux surfaces réfléchissantes.

7. Chambre acoustique multifréquences selon l'une quelconque des revendications précédentes, dans laquelle la section transversale polygonale est une section transversale rectangulaire.
